# FASCICULE DE BREVET EUROPEEN

(11) **EP 2 850 686 B1**
(45) Date de publication et mention de la délivrance du brevet: **11.01.2017**
(21) Numéro de dépôt: 13720394.9
(22) Date de dépôt: 03.05.2013
(51) Int. Cl.: H01M 2/20, H01M 10/42, H01M 10/613, H01M 10/615, H01M 10/625, H01M 10/647, H01M 10/656, H01M 10/6556

(54) **DISPOSITIF DE GESTION THERMIQUE ET DE CONNEXION POUR MODULE BATTERIE**
WÄRMEVERWALTUNG UND VERBINDUNGSVORRICHTUNG FÜR EIN BATTERIEMODUL
THERMAL MANAGEMENT AND CONNECTION DEVICE FOR A BATTERY MODULE

(30) Priorité: 14.05.2012 FR 1201391
(43) Date de publication de la demande: 25.03.2015
(73) Titulaire: Valeo Systemes Thermiques, 78320 Le Mesnil Saint Denis (FR)
(72) Inventeur: FEUILLARD, Vincent, F-78320 Le Mesnil St Denis (FR); ELLIOT, Gilles, F-91080 Courcouronnes (FR); CHAUVIN, Karen, F-78230 LePecq (FR); KIEL, Friedbald, F-77300 Fontainebleau (FR)
(74) Mandataire: Metz, Gaëlle
(86) Numéro de dépôt international: PCT/EP2013/059226
(87) Numéro de publication internationale: WO 2013/171076

(56) Documents cités:
- WO-A1-2008/153602
- WO-A1-2012/107446
- WO-A2-2010/031856
- DE-A1-102009 035 470

## Description

La présente invention concerne la connexion, la gestion, le contrôle et la régulation thermique de batteries et plus particulièrement un dispositif de gestion thermique et de connexion pour module batterie dans le domaine des véhicules électriques et hybrides.

La gestion, le contrôle électronique ainsi que la régulation thermique des batteries, notamment dans le domaine des véhicules électriques et hybrides, sont des points importants. En effet, d'un point de vue de la régulation thermique, si les batteries sont soumises à des températures trop froides, leur autonomie peut décroitre fortement et si elles sont soumises à des températures trop importantes, il y a un risque d'emballement thermique pouvant aller jusqu'à la destruction de la batterie.

Pour ce qui est de la gestion et le contrôle électronique des batteries, cela est important, notamment afin de gérer la charge et la décharge de ces dernières et de contrôler des paramètres physiques et électriques afin d'améliorer l'autonomie ainsi que la durabilité des batteries.

Dans les véhicules électriques et hybrides, les batteries sont généralement sous forme de cellules juxtaposées parallèlement les unes aux autres dans un boîtier de protection et forment ce que l'on appelle un module batterie. Les cellules peuvent être juxtaposées de sorte que les bornes positives et négatives de chaque cellule soient alternées afin de brancher en série lesdites cellules entres elles aisément. Il est également connu de juxtaposer les cellules avec les bornes de pôle identique placées d'un même coté du module batterie.

Afin de réguler la température des cellules, il est connu d'ajouter un dispositif de régulation de température du module batterie. Un tel dispositif est généralement incorporé à l'intérieur d'un boîtier contenant un ou plusieurs modules batterie et utilise des fluides caloporteurs circulant, par exemple au moyen d'une pompe, dans un circuit de conduit, ledit circuit de conduit passant notamment sous ou à l'intérieur d'une plaque d'échange thermique en contact direct avec les cellules.

Les fluides caloporteurs peuvent ainsi absorber de la chaleur émise par les cellules afin de les refroidir et évacuer cette chaleur au niveau d'un ou plusieurs échangeurs thermiques comme par exemple un radiateur ou un réfrigérant. Les fluides caloporteurs peuvent également, si besoin est, apporter de la chaleur pour réchauffer lesdites cellules, par exemple s'ils sont reliés à une résistance électrique ou à un chauffage par Coefficient Positif de Température (CTP).

Les fluides caloporteurs généralement utilisés sont l'air ambiant ou des liquides comme par exemple l'eau ou une solution d'eau et de glycol. Les liquides étant meilleurs conducteurs de chaleur que les gaz, ils sont une solution qui est privilégiée car plus efficace.

De façon générale, les plaques d'échange thermique en contact direct avec les cellules sont placées au fond des boîtiers contenant un ou plusieurs modules batteries, lesdits modules batteries reposant sur lesdites plaques d'échange thermique. Une autre possibilité connue est de placer les plaques d'échange thermique entre les cellules. Cependant, de tels emplacements de plaques d'échange thermique ne sont pas optimaux car les zones d'échauffement maximum des modules batteries sont situées entre les bornes des cellules. Afin de résoudre ce problème, une solution est de positionner la plaque d'échange thermique entre les bornes du module batterie et de la maintenir au moyen d'une plaque de maintien.

Afin d'assurer le contrôle des modules batteries, ces dernières sont généralement reliées à des dispositifs électroniques de contrôle, plus particulièrement à des circuits imprimés destinés à contrôler des paramètres physiques et électriques tels que leur température et leur tension. Ces données sont ensuite envoyées et traitées par une unité de traitement qui peut ensuite influer sur ces paramètres afin d'améliorer l'autonomie et la durabilité des modules batteries en régulant leur température via la plaque d'échange thermique et en les protégeant contre les surcharges et les sur-déchargements.

L'incorporation des équipements permettant le contrôle ainsi que la régulation thermique des modules batteries au sein d'un véhicule électrique ou hybride est crucial, cependant il nécessite l'utilisation, au sein du véhicule, d'espace qui pourrait être utilisé plus astucieusement pour l'incorporation de batteries supplémentaires par exemple. De plus, l'incorporation de tels équipements alourdit le véhicule, réduisant de fait son autonomie.

WO 2010/031856 divulgue un dispositif de gestion thermique et de connexion pour module batterie comportant en outre une plaque d'échange thermique et une plaque de connexion. DE102009035470 divulgue également un module de batterie possédant une plaque de connexion et une plaque de refroidissement, cette dernière présentant des ouvertures de diamètres différents permettant de tenir les terminaux des cellules ayant eux aussi des diamètres différents.

Un des buts de l'invention est donc de remédier au moins partiellement aux inconvénients de l'art antérieur et de proposer un module batterie avec ses équipements de contrôle et de gestion optimisé.

La présente invention concerne donc un dispositif de gestion thermique et de connexion pour module batterie d'après la revendication 1, composé de cellules juxtaposées parallèlement et branchées en série les unes aux autres, chaque cellule comportant une borne positive et une borne négative, ledit module batterie comportant en outre une plaque d'échange thermique comprenant une entrée et une sortie de fluide caloporteur placées entre les bornes et une plaque de connexion non conductrice comprenant des orifices de passages des bornes et des moyens de connexion desdites bornes deux à deux entre elles, la plaque de connexion étant un circuit imprimé comportant des pistes conductrices.

Selon un aspect de l'invention, la plaque de connexion comporte en outre des dispositifs électroniques de contrôle des cellules, lesdits dispositifs électroniques étant connectés aux pistes conductrices.

Selon un autre aspect de l'invention, les moyens de connexion des bornes sont positionnés de sorte à permettre une connexion desdites bornes lorsque les cellules sont juxtaposées avec les bornes d'un pôle identique disposées d'un même coté du module batterie.

Selon un autre aspect de l'invention, les moyens de connexion des bornes sont positionnés de sorte à permettre une connexion desdites bornes lorsque les cellules sont juxtaposées avec les bornes de pôle différent disposées en quinconce sur le module batterie.

Selon un autre aspect de l'invention, les moyens de connexion sont placés sur la surface externe de la plaque de connexion, c'est-à-dire sa surface opposée à celle en regard du module batterie.

Selon un autre aspect de l'invention, les moyens de connexion sont réalisés de matière avec les pistes conductrices dont l'épaisseur est accrue de la plaque de connexion.

Selon un autre aspect de l'invention, les moyens de connexion sont placés dans l'épaisseur de la plaque de connexion.

Selon un autre aspect de l'invention, les moyens de connexion ont une épaisseur inférieure à l'épaisseur de la plaque de connexion.

Selon un autre aspect de l'invention, les moyens de connexion ont une épaisseur égale ou supérieure à la plaque de connexion.

Selon un autre aspect de l'invention, la plaque de connexion est réalisée en matière rigide.

Selon un autre aspect de l'invention, la plaque de connexion est réalisée en matière flexible.

Selon un autre aspect de l'invention, la plaque d'échange thermique est indépendante de la plaque de connexion.

Selon un autre aspect de l'invention, la plaque d'échange thermique est intégrée directement dans la plaque de connexion.

Selon un autre aspect de l'invention, la plaque de connexion comporte des nervures de séparation isolant électriquement la plaque d'échange thermique et les moyens de connexion.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 montre une représentation schématique en perspective éclatée d'un dispositif de gestion thermique et de connexion pour module batterie selon un mode de réalisation,
- la figure 2 montre une représentation schématique en perspective éclatée d'un dispositif de gestion thermique et de connexion pour module batterie selon un autre mode de réalisation,
- la figure 3 montre une représentation schématique en coupe d'un dispositif de gestion thermique et de connexion positionné sur un module batterie,
- la figure 4 montre une représentation schématique en coupe d'un dispositif de gestion thermique et de connexion positionné sur un module batterie, selon un premier mode de réalisation alternatif,
- la figure 5 montre une représentation schématique en coupe d'un dispositif de gestion thermique et de connexion positionné sur un module batterie, selon un second mode de réalisation alternatif,
- la figure 6 montre une représentation schématique en coupe d'un dispositif de gestion thermique et de connexion positionné sur un module batterie, selon un troisième mode de réalisation alternatif,

Sur les différentes figures, les éléments identiques portent les mêmes numéros de référence.

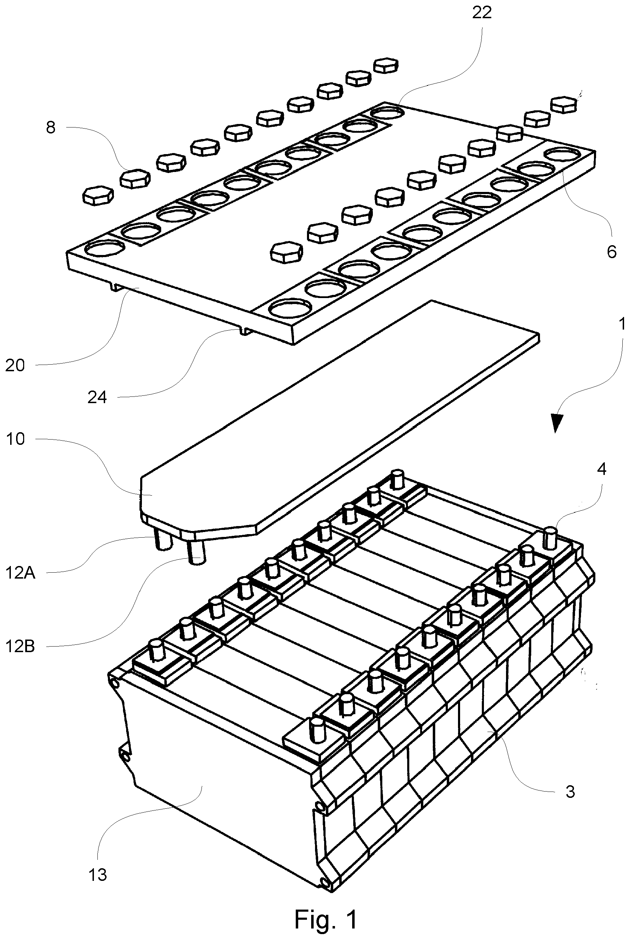

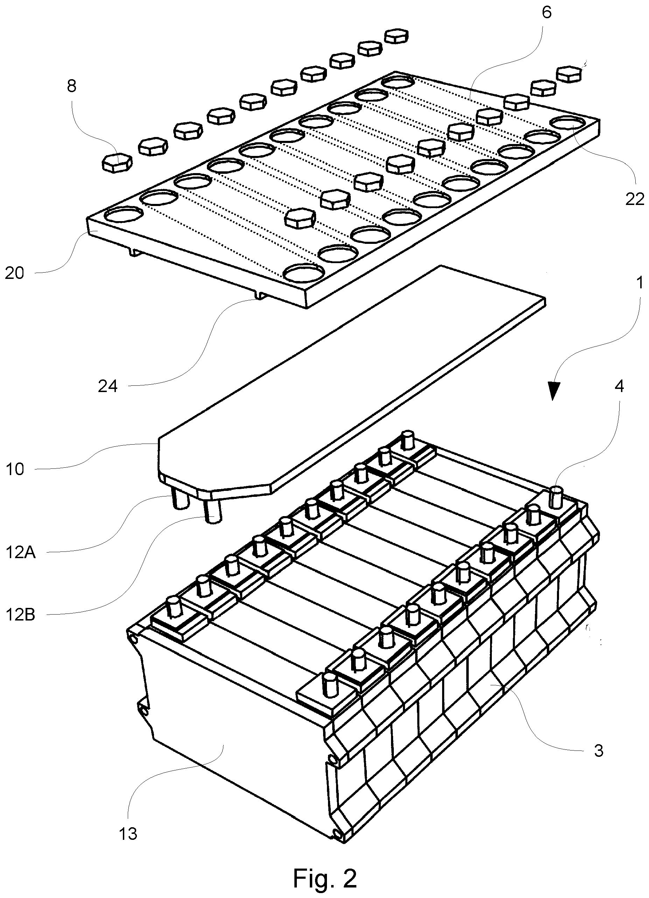

Les figures 1 et 2 montrent des vues en perspective éclatée d'un module batterie 1 et de son dispositif de gestion thermique et de connexion. Le module batterie 1 comporte ainsi des cellules 3 juxtaposées parallèlement les unes aux autres. Chaque cellule 3 comporte des bornes 4, une borne positive et une borne négative. Sur ces figures 1 et 2, les cellules 3 sont positionnées de sorte que leurs bornes sont alignées, formant deux séries alignées de bornes 4.

Afin de différencier les bornes positive et négative d'une même cellule 3 et ainsi d'éviter les erreurs de branchement, il est possible d'avoir des bornes 4 de diamètre différent. Ainsi, par exemple, les bornes négatives de chaque cellule 3 ont un plus grand diamètre que les bornes positives, ou inversement.

Pour maintenir les différentes cellules 3 entres elles, il est possible d'enserrer lesdites cellules 3 entre deux flasques 13 reliées entre elles par des tirants.

Afin de brancher en série les différentes cellules 3 en reliant électriquement la borne positive d'une cellule 3 à la borne négative d'une des cellules 3 voisine, le dispositif de gestion thermique et de connexion comprend une plaque de connexion 20 non conductrice mais comportant des moyens de connexion 6 des bornes 4 entres elles, ainsi que des orifices 22 pour le passage des bornes 4. La plaque de connexion 20 est placée sur le module batterie 1 et est maintenue en place au moyen d'éléments de fixation 8, tels que des écrous venant se visser sur les bornes 4.

Le fait que les moyens de connexion 6 soient directement présents sur la plaque de connexion 20 permet notamment un câblage plus rapide du module batterie 1. De plus il est possible d'intégrer un système de détrompage de branchement directement sur la plaque de connexion 20, par exemple en utilisant les bornes positives et négatives de diamètres différents avec des orifices 22 de diamètres correspondants. Les moyens de connexion 6 sont généralement des pièces métalliques, plus particulièrement de cuivre, dont l'épaisseur est suffisante pour résister et conduire efficacement le courant entre deux bornes 4. Les moyens de connexion 6 peuvent être gravés sur la plaque de connexion 20, rapportés sur cette dernière ou encore être réalisés sous forme d'inserts cuivre, selon différentes méthodes connues de l'homme du métier. Dans le dernier cas, le serrage des inserts cuivre ne se fait préférentiellement pas directement sur la matière de la plaque de connexion 20 mais sur du cuivre rapporté sur cette dernière.

La plaque de connexion 20 est préférentiellement un circuit imprimé comportant des pistes conductrices 60, par exemple en cuivre, reliant également les bornes positives et négatives des cellules 3. Selon une variante, la plaque de connexion 20 peut être réalisée en matériau rigide pour faciliter la mise en place et rigidifier le module batterie 1. Selon une autre variante, la plaque de connexion 20 peut au contraire être réalisée en matériau flexible ou semi-flexible afin de faciliter la modularité du module batterie 1.

Dans l'exemple présenté par la figure 1, les cellules 3 sont juxtaposées parallèlement les unes aux autres de sorte que la borne 4positive d'une cellule 3 est placée en vis-à-vis de la borne 4 négative de la ou des cellules juxtaposées sur ses côtés. Les bornes 4 positives et négatives sont donc disposées en quinconce formant deux séries alignées de bornes 4 et les moyens de connexion 6 sont positionnés sur les bords latéraux de la plaque de connexion 20 afin de relier lesdites bornes 4 de pôle opposés.

Dans l'exemple présenté par la figure 2, les cellules 3 sont juxtaposées parallèlement les unes aux autres avec les bornes 4 d'un pôle identique disposées d'un même coté du module batterie 1. Afin de relier les bornes 4 de pôles opposés, les moyens de connexion 6 traversent la plaque de connexion 20 dans sa largeur.

Le dispositif de gestion thermique et de connexion comporte également un ou des dispositifs électroniques (non représentés) de contrôle des cellules 3 placés sur la plaque de connexion 20, et plus précisément reliés aux pistes de connexion 60. Ces dispositifs électroniques permettent de gérer et de contrôler des paramètres physiques et électriques du module batterie 1, tels que sa température et sa tension. Le ou les dispositifs électroniques étant placés sur la plaque de connexion 20, peuvent gérer et contrôler le module batterie 1 dans son ensemble ou bien permettre la gestion et le contrôle des cellules 3 indépendamment. Ainsi, une surveillance individuelle de chaque cellules 3 composant le module batterie 1 est possible.

Afin de réguler la température du module batterie 1, le dispositif de gestion thermique et de connexion est relié à un dispositif de gestion thermique comportant une plaque d'échange thermique 10 placée entre les séries alignées de bornes 4, comme le montre les figures 1 et 2. La plaque d'échange thermique 10, généralement réalisée en métal, comporte en son sein un circuit de fluide caloporteur, et permet un échange d'énergie calorifique entre le module batterie 1 et un circuit de gestion thermique extérieur. La plaque d'échange thermique 10 comporte ainsi une entrée 12A et une sortie 12B de fluide caloporteur reliées au circuit de gestion thermique extérieur. L'entrée 12A et la sortie 12B de fluide caloporteur peuvent être placées d'un même coté de la plaque d'échange thermique 10 afin de faciliter le montage et les branchements.

Le fait de placer la plaque d'échange thermique 10 entre les séries alignées de borne 4 permet une gestion thermique du module batterie 1 où cela est nécessaire car, lors de l'utilisation dudit module batterie 1, la zone où il y a le plus de production de chaleur est celle située entre les bornes 4, du fait des réactions électrochimiques à l'intérieur de la cellule 3. De plus, un fort courant passe au niveau des moyens de connexion 6, la résistance au passage de ce courant des moyens de connexion 6 entraîne également une production de chaleur qui peut ainsi être régulée par la présence de la plaque d'échange thermique 10.

La plaque de connexion 20 permet une isolation électrique entre la plaque d'échange thermique 10 et les moyens de connexion 6 du module batterie 1. En effet ces éléments étant en métal, ils sont des conducteurs électriques et s'ils étaient en contact, cela provoquerait des courts-circuits et serait dangereux. La plaque de connexion 20 permet de plus, de par les éléments de fixation 8, d'appliquer une pression uniforme sur le module batterie 1.

Selon un premier mode de réalisation présenté par les figures 1 et 2, la plaque d'échange thermique 10 est indépendante de la plaque de connexion 20 et est placée entre la face comportant les bornes 4 du module batterie 1 et la plaque de connexion 20. Pour assurer l'isolation électrique, la plaque de connexion 20 peut comporter un élément de séparation isolant 24. Cet élément de séparation isolant 24 peut ainsi être composé de deux nervures 24 venant de matière avec la plaque de connexion 20 et se plaçant entre les bornes 4 et la plaque d'échange thermique 10.

Selon un second mode de réalisation, non représenté, la plaque d'échange thermique 10 est intégrée directement dans la plaque de connexion 20.

Les moyens de connexion 6 jouent un double rôle car en plus de permettre la conduction électrique entre les bornes 4 des différentes cellules 3, ils permettent une conduction thermique accrue entre la plaque d'échange thermique 10 et les bornes 4. Ainsi, la régulation thermique effectuée par la plaque d'échange thermique 10 est meilleur au niveau desdites bornes 4, où cela est nécessaire.

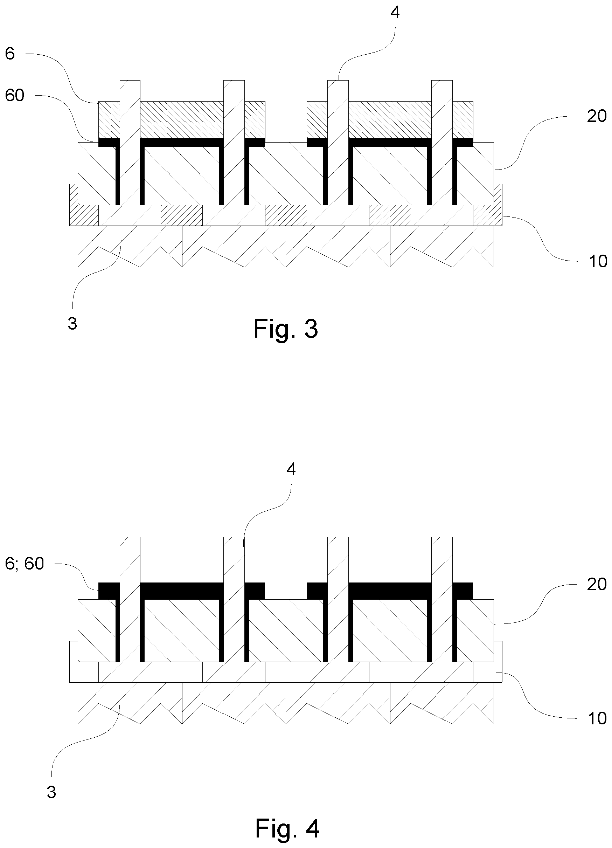

Les figures 3 à 6 montrent des représentations schématiques en coupe de module de batterie 1 au niveau des bornes 4 où figurent les moyens de connexion 6 ainsi que les pistes de connexion 60. Sur les différentes figures 3 à 6, les cellules 3 sont juxtaposées avec leurs bornes 4 en quinconce.

La figure 3 montre un premier mode de réalisation des moyens de connexion 6 où ces derniers sont placés sur la surface externe de la plaque de connexion 20, c'est-à-dire sa surface opposée à celle en regard du module batterie 1. Ce mode de réalisation permet un montage aisé des moyens de connexion 6 sur la plaque de connexion 20.

La figure 4 montre un second mode de réalisation des moyens de connexion 6 où ces derniers sont réalisés de matière avec les pistes conductrices 60, c'est-à-dire formant une pièce unique. Les pistes conductrices 60 ont ainsi une épaisseur accrue afin d'améliorer leur conduction thermique et pouvoir résister à la tension entre les bornes 4. Ce mode de réalisation permet notamment de réduire les coûts de production en limitant le nombre d'étapes pour la fabrication de la plaque de connexion 20.

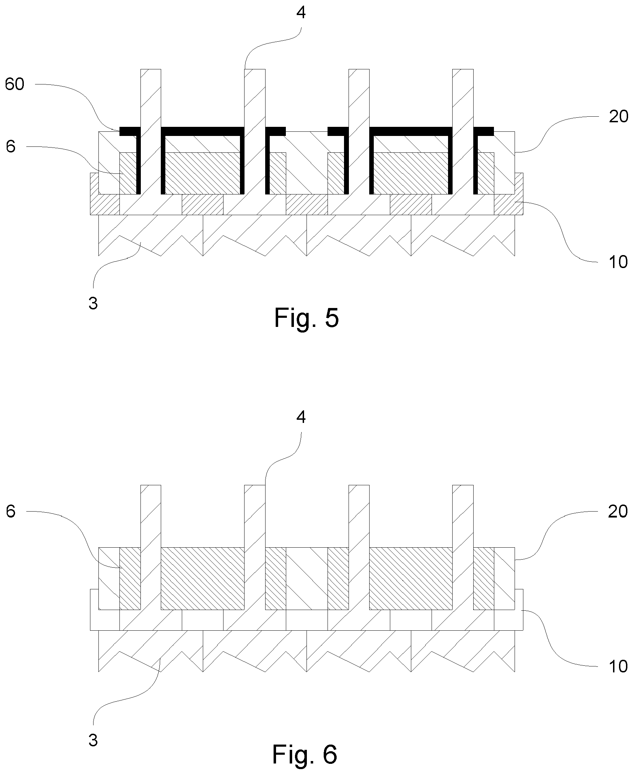

La figure 5 montre un troisième mode de réalisation des moyens de connexion 6 où ces derniers sont placés dans l'épaisseur de la plaque de connexion 20, avec cependant une épaisseur inférieure à l'épaisseur de ladite plaque de connexion 20. Ce mode de réalisation permet notamment de réduire l'épaisseur de la plaque de connexion 20, ainsi qu'une augmentation de la protection des moyens de connexion 6 puisque ces derniers sont protégés dans la plaque de connexion 20.

Enfin, la figure 6 montre un dernier mode de réalisation des moyens de connexion 6 où ces derniers sont également placés dans l'épaisseur de la plaque de connexion 20. Dans ce mode de réalisation, moyens de connexion 6 ont une épaisseur supérieure ou égale à l'épaisseur de la plaque de connexion 20. Ce mode de réalisation permet également une bonne protection des moyens de connexion 6, ainsi qu'une facilité de montage desdits moyens de connexion 6 sous forme d'insert sur la plaque de connexion 20.

Ainsi, on voit bien que le dispositif de gestion thermique et de connexion selon l'invention, de par le fait que la plaque de connexion 20 soit un circuit imprimé comportant notamment des dispositifs électroniques de contrôle et de conducteurs thermiques, permet une optimisation du contrôle et de la gestion du module batterie 1 dans son ensemble, mais également des cellules 3 individuellement. De plus, l'intégration de ces différents éléments sur un même dispositif permet une plus grande compacité et même un gain de poids du module batterie 1. Cela permet également une plus grande modularité pour l'installation des différents modules batterie 1 au sein du véhicule. En effet, chaque module batterie 1 ayant son dispositif de gestion thermique et de connexion propre, il est plus aisé de les placer où l'on souhaite, dans les recoins et volumes disponibles du véhicule.

## Revendications

1. Dispositif de gestion thermique et de connexion pour module batterie (1) composé de cellules (3) juxtaposées parallèlement et branchées en série les unes aux autres, chaque cellule (3) comportant une borne (4) positive et une borne (4) négative, ledit module batterie (1) comportant en outre une plaque d'échange thermique (10) comprenant une entrée (12A) et une sortie (12B) de fluide caloporteur placées entre les bornes (4) et une plaque de connexion (20) non conductrice comprenant des orifices de passages (22) des bornes (4) et des moyens de connexion (6) desdites bornes (4) deux à deux entre elles, **caractérisé en ce que** la plaque de connexion (20) est un circuit imprimé comportant des pistes conductrices (60), ledit dispositif comprenant un système de détrompage de branchement intégré directement sur la plaque de connexion (20).

2. Dispositif de gestion thermique et de connexion selon la revendication 1, **caractérisé en ce que** la plaque de connexion (20) comporte en outre des dispositifs électroniques de contrôle des cellules (3), lesdits dispositifs électroniques étant connectés aux pistes conductrices (60).

3. Dispositif de gestion thermique et de connexion selon l'une des revendications précédentes, **caractérisé en ce que** les moyens de connexion (6) des bornes (4) sont positionnés de sorte à permettre une connexion desdites bornes (4) lorsque les cellules (3) sont juxtaposées avec les bornes (4) d'un pôle identique disposées d'un même coté du module batterie (1).

4. Dispositif de gestion thermique et de connexion selon l'une des revendications 1 et 2, **caractérisé en ce que** les moyens de connexion (6) des bornes (4) sont positionnés de sorte à permettre une connexion desdites bornes (4) lorsque les cellules (3) sont juxtaposées avec les bornes (4) de pôle différent disposées en quinconce sur le module batterie (1).

5. Dispositif de gestion thermique et de connexion selon l'une des revendications précédentes, **caractérisé en ce que** les moyens de connexion (6) sont placés sur la surface externe de la plaque de connexion (20), c'est-à-dire sa surface opposée à celle en regard du module batterie (1).

6. Dispositif de gestion thermique et de connexion selon l'une des revendications 1 à 4, **caractérisé en ce que** les moyens de connexion (6) sont réalisés de matière avec les pistes conductrices (60) dont l'épaisseur est accrue de la plaque de connexion (20).

7. Dispositif de gestion thermique et de connexion selon l'une des revendications 1 à 4, **caractérisé en ce que** les moyens de connexion (6) sont placés dans l'épaisseur de la plaque de connexion (20).

8. Dispositif de gestion thermique et de connexion selon la revendication précédente, **caractérisé en ce que** les moyens de connexion (6) ont une épaisseur inférieure à l'épaisseur de la plaque de connexion (20).

9. Dispositif de gestion thermique et de connexion selon la revendication 7, **caractérisé en ce que** les moyens de connexion (6) ont une épaisseur égale ou supérieure à la plaque de connexion (20).

10. Dispositif de gestion thermique et de connexion selon l'une des revendications précédentes, **caractérisé en ce que** la plaque de connexion (20) est réalisée en matière rigide.

11. Dispositif de gestion thermique et de connexion selon l'une des revendications 1 à 9, **caractérisé en ce que** la plaque de connexion (20) est réalisée en matière flexible.

12. Dispositif de gestion thermique et de connexion selon l'une des revendications précédentes, **caractérisé en ce que** la plaque d'échange thermique (10) est indépendante de la plaque de connexion (20).

13. Dispositif de gestion thermique et de connexion selon l'une des revendications précédentes, **caractérisé en ce que** la plaque d'échange thermique (10) est intégrée directement dans la plaque de connexion (20).

14. Dispositif de gestion thermique et de connexion selon l'une des revendications précédentes, **caractérisé en ce que** la plaque de connexion (20) comporte des nervures de séparation (24) isolant électriquement la plaque d'échange thermique (10) et les moyens de connexion (6).

## Patentansprüche

1. Wärmemanagement- und Verbindungsvorrichtung für ein Batteriemodul (1) bestehend aus parallel nebeneinander angeordneten und miteinander in Reihe geschalteten Zellen (3), wobei jede Zelle (3) eine positive Klemme (4) und eine negative Klemme (4) aufweist, wobei das Batteriemodul (1) außerdem eine Wärmetauscherplatte (10), die einen Eingang (12A) und einen Ausgang (12B) von Wärmeträgerfluid enthält, die zwischen den Klemmen (4) angeordnet sind, und eine nicht leitende Verbindungsplatte (20) aufweist, die Durchgangsöffnungen (22) für die Klemmen (4) und Einrichtungen (6) zur paarweisen Verbindung der Klemmen (4) miteinander enthält, **dadurch gekennzeichnet, dass** die Verbindungsplatte (20) eine Leiterplatte ist, die Leiterbahnen (60) aufweist, wobei die Vorrichtung ein Anschluss-Unverwechselbarkeitssystem enthält, das direkt auf die Verbindungsplatte (20) montiert ist.

2. Wärmemanagement- und Verbindungsvorrichtung nach Anspruch 1, **dadurch gekennzeichnet, dass** die Verbindungsplatte (20) außerdem elektronische Kontrollvorrichtungen der Zellen (3) aufweist, wobei die elektronischen Vorrichtungen mit den Leiterbahnen (60) verbunden sind.

3. Wärmemanagement- und Verbindungsvorrichtung nach einem der vorhergehenden Ansprüche, **dadurch gekennzeichnet, dass** die Verbindungseinrichtungen (6) der Klemmen (4) so positioniert sind, dass sie eine Verbindung der Klemmen (4) erlauben, wenn die Zellen (3) neben den Klemmen (4) eines gleichen Pols liegen, die auf der gleichen Seite des Batteriemoduls (1) angeordnet sind.

4. Wärmemanagement- und Verbindungsvorrichtung, nach einem der Ansprüche 1 und 2, **dadurch gekennzeichnet, dass** die Verbindungseinrichtungen (6) der Klemmen (4) so positioniert sind, dass sie eine Verbindung der Klemmen (4) erlauben, wenn die Zellen (3) neben den Klemmen (4) eines anderen Pols liegen, die versetzt auf dem Batteriemodul (1) angeordnet sind.

5. Wärmemanagement- und Verbindungsvorrichtung nach einem der vorhergehenden Ansprüche, **dadurch gekennzeichnet, dass** die Verbindungseinrichtungen (6) auf der Außenfläche der Verbindungsplatte (20) platziert sind, d.h. ihrer Fläche entgegengesetzt zu derjenigen, die dem Batteriemodul (1) gegenüberliegt.

6. Wärmemanagement- und Verbindungsvorrichtung nach einem der Ansprüche 1 bis 4, **dadurch gekennzeichnet, dass** die Verbindungseinrichtungen (6) aus einem Stück mit den Leiterbahnen (60) hergestellt sind, deren Dicke um die Verbindungsplatte (20) vergrößert ist.

7. Wärmemanagement- und Verbindungsvorrichtung nach einem der Ansprüche 1 bis 4, **dadurch gekennzeichnet, dass** die Verbindungseinrichtungen (6) in der Dicke der Verbindungsplatte (20) platziert sind.

8. Wärmemanagement- und Verbindungsvorrichtung nach dem vorhergehenden Anspruch, **dadurch gekennzeichnet, dass** die Verbindungseinrichtungen (6) eine geringere Dicke als die Dicke der Verbindungsplatte (20) haben.

9. Wärmemanagement- und Verbindungsvorrichtung nach Anspruch 7, **dadurch gekennzeichnet, dass** die Verbindungseinrichtungen (6) eine Dicke gleich der oder größer als die Verbindungsplatte (20) haben.

10. Wärmemanagement- und Verbindungsvorrichtung nach einem der vorhergehenden Ansprüche, **dadurch gekennzeichnet, dass** die Verbindungsplatte (20) aus steifem Material hergestellt ist.

11. Wärmemanagement- und Verbindungsvorrichtung nach einem der Ansprüche 1 bis 9, **dadurch gekennzeichnet, dass** die Verbindungsplatte (20) aus biegsamem Material hergestellt ist.

12. Wärmemanagement- und Verbindungsvorrichtung nach einem der vorhergehenden Ansprüche, **dadurch gekennzeichnet, dass** die Wärmetauscherplatte (10) von der Verbindungsplatte (20) unabhängig ist.

13. Wärmemanagement- und Verbindungsvorrichtung nach einem der vorhergehenden Ansprüche, **dadurch gekennzeichnet, dass** die Wärmetauscherplatte (10) direkt in die Verbindungsplatte (20) eingebaut ist.

14. Wärmemanagement- und Verbindungsvorrichtung nach einem der vorhergehenden Ansprüche, **dadurch gekennzeichnet, dass** die Verbindungsplatte (20) Trennrippen (24) aufweist, die die Wärmetauscherplatte (10) und die Verbindungseinrichtungen (6) thermisch isolieren.

## Claims

1. Thermal management and connection device for a battery module (1) composed of cells (3) which are juxtaposed in parallel and connected in series with one another, each cell (3) comprising a positive terminal (4) and a negative terminal (4), said battery module (1) further comprising a heat-exchange plate (10) comprising an inlet (12a) and an outlet (12b) for heat-transfer fluid, these being positioned between the terminals (4), and a non-conducting connection plate (20) comprising passage orifices (22) for the terminals (4) and means (6) of connecting said terminals (4) together in pairs, **characterized in that** the connection plate (20) is a printed circuit comprising conducting traces (60), said device comprising a connection pokayoke system directly incorporated into the connection plate (20).

2. Thermal management and connection device according to Claim 1, **characterized in that** the connection plate (20) further comprises electronic devices for controlling the cells (3), said electronic devices being connected to the conducting traces (60).

3. Thermal management and connection device according to either of the preceding claims, **characterized in that** the means (6) of connecting the terminals (4) are positioned in such a way as to allow said terminals (4) to be connected when the cells (3) are juxtaposed with the terminals (4) of an identical pole which are arranged on one and the same side of the battery module (1).

4. Thermal management and connection device according to either of Claims 1 and 2, **characterized in that** the means (6) of connecting the terminals (4) are positioned so as to allow said terminals (4) to be connected when the cells (3) are juxtaposed with the terminals (4) of a different pole which are arranged in a staggered configuration on the battery module (1).

5. Thermal management and connection device according to one of the preceding claims, **characterized in that** the connection means (6) are positioned on the external surface of the connection plate (20), namely on the surface thereof that is the opposite surface to the surface facing the battery module (1).

6. Thermal management and connection device according to one of Claims 1 to 4, **characterized in that** the connection means (6) are produced integrally with the conducting traces (60), of increased thickness, of the connection plate (20).

7. Thermal management and connection device according to one of Claims 1 to 4, **characterized in that** the connection means (6) are positioned within the thickness of the connection plate (20).

8. Thermal management and connection device according to the preceding claim, **characterized in that** the connection means (6) have a thickness less than the thickness of the connection plate (20).

9. Thermal management and connection device according to Claim 7, **characterized in that** the connection means (6) have a thickness equal to or greater than the connection plate (20).

10. Thermal management and connection device according to one of the preceding claims, **characterized in that** the connection plate (20) is made of a rigid material.

11. Thermal management and connection device according to one of Claims 1 to 9, **characterized in that** the connection plate (20) is made of a flexible material.

12. Thermal management and connection device according to one of the preceding claims, **characterized in that** the heat-exchange plate (10) is independent of the connection plate (20).

13. Thermal management and connection device according to one of the preceding claims, **characterized in that** the heat-exchange plate (10) is incorporated directly into the connection plate (20).

14. Thermal management and connection device according to one of the preceding claims, **characterized in that** the connection plate (20) comprises separating ribs (24) electrically insulating the heat-exchange plate (10) and the connection means (6).
